# EUROPEAN PATENT APPLICATION

(11) **EP 4 495 400 A1**
(43) Date of publication of application: **22.01.2025**
(21) Application number: 22932394.4
(22) Date of filing: 25.07.2022
(51) Int. Cl.: F01P 7/14, F16K 27/02, F16K 11/06, F16K 31/53

(54) **MULTI-PORT VALVE APPARATUS AND THERMAL MANAGEMENT SYSTEM USING SAME**

(30) Priority: 15.03.2022 KR 20220032277
(71) Applicant: GMB Korea Corp., Changwon-si, Gyeongsangnam-do 51557 (KR)
(72) Inventor: LEE, Mun Seop, Yongin-si Gyeonggi-do 16862 (KR); KIM, Kyung Hwan, Incheon 22202 (KR); BANG, Dae Jin, Gunpo-si Gyeonggi-do 15812 (KR)
(74) Representative: Purdylucey Intellectual Property
(86) International application number: PCT/KR2022/010911
(87) International publication number: WO 2023/177027

(57) **Abstract**

The present invention introduce a multi-port valve apparatus and a thermal management system using the same that are capable of improving the temperature management efficiency of the coolant by reducing the overall package size of the valves, selectively circulating coolant to a plurality of coolant flow paths through the valves with guaranteed functionality, and facilitating separate or mixed distribution of coolant depending on circumstances.

## Description

### [Technical Field]

### CROSS-REFERENCE TO RELATED APPLICATION

This application claims priority to and the benefit of Korean Patent Application No. 10-2022-0032277 filed in the Korean Intellectual Property Office on March 15, 2022, the entire contents of which are incorporated herein by reference.

### TECHNICAL FIELD

The present invention relates to a multi-port valve apparatus allowing coolant to selectively circulate through a plurality of coolant flow paths and a thermal management system using the same.

### [Background Art]

Electric vehicles obtain their driving energy from electrical energy rather than from the combustion of fossil fuels, unlike traditional vehicles. Electric vehicles, which produce no exhaust gases and generate very little noise, were not widely adopted due to issues like heavy battery weight and long charging times, but their development has recently accelerated due to increasing pollution problems and the fossil fuel depletion.

Generally, electric vehicles driven by motors are equipped with inverters, low-voltage DC-DC converts (LDCs) for regulating DC voltage, and chargers, and due to their heat generation characteristics, a cooling system is essential for consistently maintaining an appropriate temperature.

The cooling system employs a water pump to circulate coolant through the motor, associated electrical components, and a heat source, effectively safeguarding these heat-generating components from overheating.

Unlike conventional internal combustion engine vehicles that utilize waste heat from combustion for interior heating without significantly increasing fuel consumption for heating, electric vehicles with limited waste heat require active utilization of heat from motors, batteries, and external sources for both cabin heating and battery temperature maintenance. To achieve this, a heat pump system using refrigerant and a device for precisely controlling the flow of coolant circulating through the battery, motor, and other components are required.

The need to manage each electronic device under varying conditions for optimal vehicle efficiency necessitates complex routing, multiple valves, and an oversized coolant distribution structure, resulting in complex challenges.

The foregoing is intended merely to aid in the understanding of the background of the present invention, and is not intended to mean that the present invention falls within the purview of the related art that is already known to those skilled in the art.

### [Disclosure]

### [Technical Problem]

The present invention has been conceived to solve the above problems and it is an object of the present invention to provide a multi-port valve apparatus and a thermal management system using the same that are capable of improving the temperature management efficiency of the coolant by reducing the overall package size of the valves, selectively circulating coolant to a plurality of coolant flow paths through the valves with guaranteed functionality, and facilitating separate or mixed distribution of coolant depending on circumstances.

### [Technical Solution]

In order to accomplish the above objects, a multi-port valve apparatus according to the present invention includes a housing including a plurality of flow paths through which a cooling medium circulates, and an interior including a valve space and a flow space, a first valve rotatably provided in the valve space of the housing and configured to selectively circulate the cooling medium through the plurality of flow paths and the flow space, a second valve rotatably provided in the valve space of the housing to be rotated in conjunction with the first valve and configured to selectively circulate the cooling medium through the plurality of flow paths and the slow space, and an actuator provided in the housing and connected to the first valve to control the positions of the first and second valves.

The plurality of flow paths and the flow space may be arranged separately in the housing.

The first valve may include a plurality of first portholes formed on the outer surface thereof, and the second valve includes a plurality of second portholes, one of the plurality of first portholes and second portholes matching with the flow space depending on the rotational positions of the first and second valves, the remaining portholes configured to match to different ports.

The first valve and the second valve each may include four first portholes and four second portholes, and one of the first portholes and one of the second portholes are connected through the flow space, forming six ports with the first valve and the second valve.

The first portholes of the first valve may be spaced at 90° intervals, the second portholes of the second valve are spaced at 90° intervals, and the actuator rotates the first valve by 90° increments, causing the first and second valves to be linked at a predetermined rotation angle and to rotate together by the rotation angle.

The first valve and the second valve may be coaxially aligned, the first valve including a first gear formed on the outer surface thereof, the second valve including a second gear formed on the outer surface thereof, the first and second gears meshing together via a connecting gear.

The connecting gear may be rotatably provided in the flow space of the housing.

The first gear may be formed along a part of the outer surface of the first valve, and the second gear is entirely formed along the outer surface of the second valve, the first gear meshing with the connecting gear based on the first valve rotating within a predetermined angle range, causing the second gear to rotate together with the connecting gear.

The first valve and the second valve may be formed with facing end portions that overlap in a rotatable manner.

The first valve and the second valve may be arranged with the center axes thereof aligned horizontally, the first valve including a first gear formed along part of the outer surface thereof, the second valve including a second gear formed along part of the outer surface thereof to mesh with the first gear.

The second valve may include a support protrusion extending from the outer surface thereof on both sides of the second gear, the support protrusion configured to contact with the outer surface of the first valve.

The second valve, while the first valve is rotating, may be configured not to rotate when the support protrusion contacts with the outer surface of the first valve, and may be configured to rotate by a predetermined angle based on the first gear meshing with the second gear while the first valve rotates within a predetermined angle range.

The first valve and the second valve may be arranged to intersect each other and mesh together.

The first valve and the second valve may be coaxially aligned, the first valve including a driving groove having a predetermined area on one end portion thereof facing the second valve, the second valve including a corresponding driving protrusion inserted into the driving groove on one end portion facing the first valve.

The first valve may be formed with the driving groove extending from the center axis by a predetermined angle, the second valve, while the first valve is rotating, configured not to rotate when the driving protrusion moves within the driving groove and configured to rotate in conjunction with the first valve to cause the driving protrusion to contact and to be pushed by either side of the driving groove when the first valve rotates more than a predetermined angle.

The second valve may include a position-fixing protrusion protruding on the outer surface thereof, and the housing includes an elastic support member contacting with the outer surface of the second valve or the position-fixing protrusion of the second valve depending on the rotational position of the second valve.

Meanwhile, a thermal management system including the multi-port valve apparatus includes a first coolant line configured to circulate a cooling medium to a first pump, a battery, and a first heat exchanger, and a second coolant line configured to circulate the cooling medium to a second pump, a power electronics module, a second heat exchanger, and a radiator, wherein the coolant from the first coolant line and the second coolant line is selectively shared through the multi-port valve apparatus to switch the flow direction of the cooling medium by the multi-port valve apparatus.

### [Advantageous Effects]

The multi-port valve apparatus and thermal management system using the same, structured as described in above, are advantageous in terms of improving the temperature management efficiency of the coolant by reducing the overall package size of the valves, selectively circulating coolant to a plurality of coolant flow paths through the valves with guaranteed functionality, and facilitating separate or mixed distribution of coolant depending on circumstances.

### [Description of Drawings]

FIG. 1 is a diagram illustrating a multi-port valve apparatus according to an embodiment of the present invention;
FIG. 2 is a side cross-sectional view of the multi-port valve apparatus of FIG. 1;
FIG. 3 is a front cross-sectional view of the multi-port valve apparatus of FIG. 1;
FIG. 4 is a diagram illustrating a housing of the multi-port valve apparatus of FIG. 1;
FIG. 5 is a diagram illustrating the cooling medium circulation flow of the multi-port valve apparatus of FIG. 1;
FIG. 6 is a diagram illustrating the first and second valves according to the first embodiment;
FIGS. 7 to 10 are diagrams illustrating the operations of the first and second valves according to the first embodiment;
FIGS. 11 to 14 are diagrams illustrating the operation of the first and second valves according to the second embodiment;
FIG. 15 is a diagram illustrating the first and second valves according to the third embodiment;
FIG. 16 is a diagram illustrating the first and second valves according to the fourth embodiment;
FIGS. 17 to 20 are diagrams illustrating the operation of the first and second valves according to the fourth embodiment; and
FIG. 21 is a diagram illustrating a thermal management system according to the present invention.

### [Mode for Invention]

Hereinafter, descriptions are made of the embodiments disclosed in the present specification with reference to the accompanying drawings in which the same reference numbers are assigned to refer to the same or like components and redundant description thereof is omitted.

As used in the following description, the suffixes "module" and "unit" are granted or used interchangeably for convenience of description but do not have distinct meanings or roles by themselves.

In addition, detailed descriptions of well-known technologies related to the embodiments disclosed in the present specification may be omitted to avoid obscuring the subject matter of the embodiments disclosed in the present specification. In addition, the accompanying drawings are only for easy understanding of the embodiments disclosed in the present specification and do not limit the technical spirit disclosed herein, and it should be understood that the embodiments include all changes, equivalents, and substitutes within the spirit and scope of the disclosure.

As used herein, terms including an ordinal number such as "first" and "second" can be used to describe various components without limiting the components. The terms are used only for distinguishing one component from another component.

It will be understood that when a component is referred to as being "connected to" or "coupled to" another component, it can be directly connected or coupled to the other component or intervening component may be present. In contrast, when a component is referred to as being "directly connected to" or "directly coupled to" another component, there are no intervening component present.

The singular forms are intended to include the plural forms as well unless the context clearly indicates otherwise.

It will be further understood that the terms "comprises" or "has," when used in this specification, specify the presence of a stated feature, number, step, operation, component, element, or a combination thereof, but they do not preclude the presence or addition of one or more other features, numbers, steps, operations, components, elements, or combinations thereof.

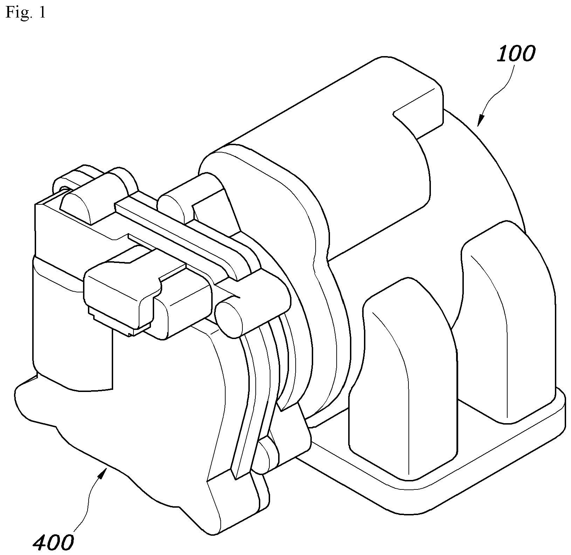

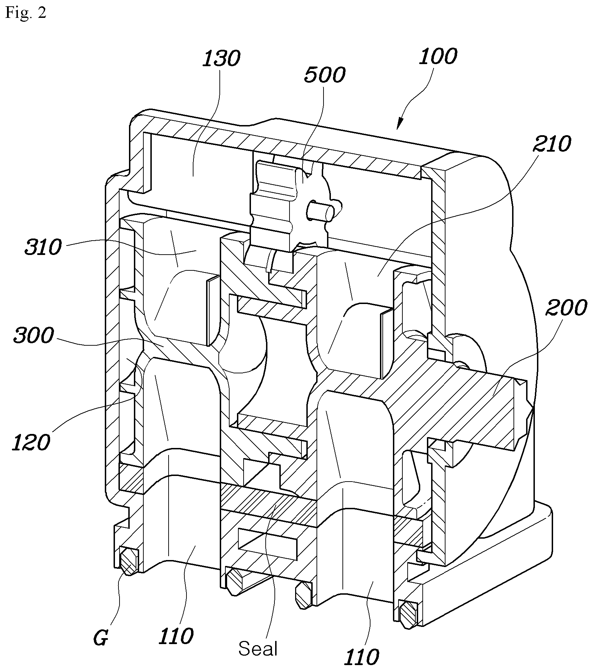

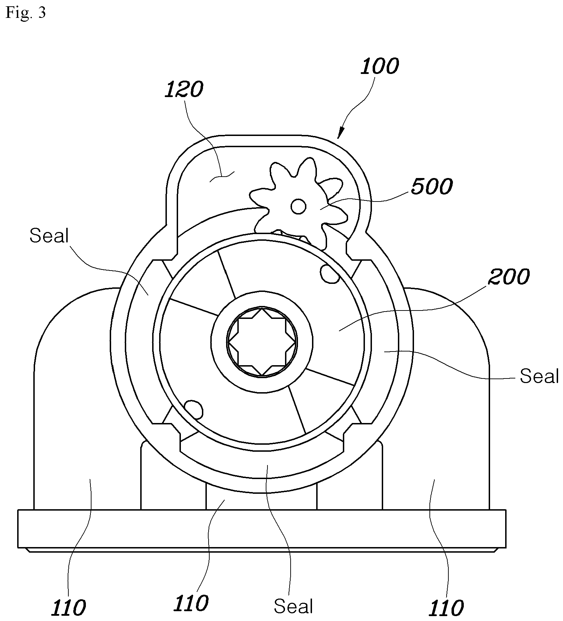

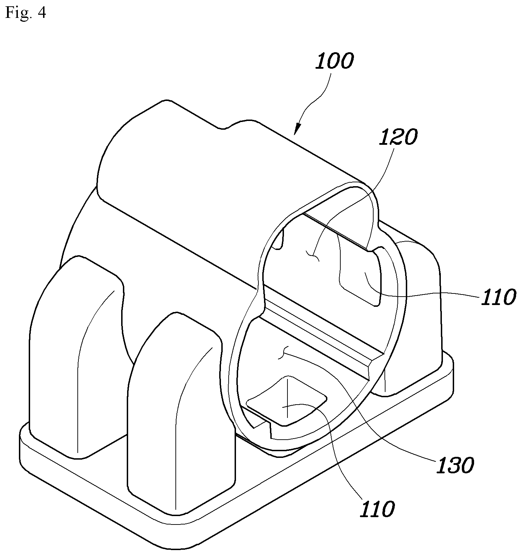

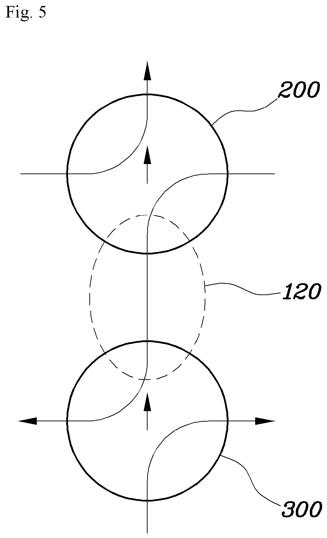

FIG. 1 is a diagram illustrating a multi-port valve apparatus according to an embodiment of the present invention, FIG. 2 is a side cross-sectional view of the multi-port valve apparatus of FIG. 1, FIG. 3 is a front cross-sectional view of the multi-port valve apparatus of FIG. 1, FIG. 4 is a diagram illustrating a housing of the multi-port valve apparatus of FIG. 1, and FIG. 5 is a diagram illustrating the coolant circulation flow structure of the multi-port valve apparatus of FIG. 1.

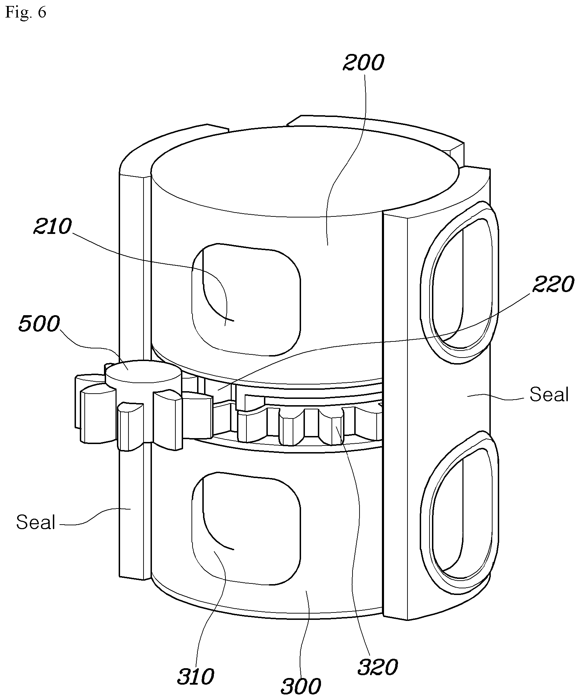

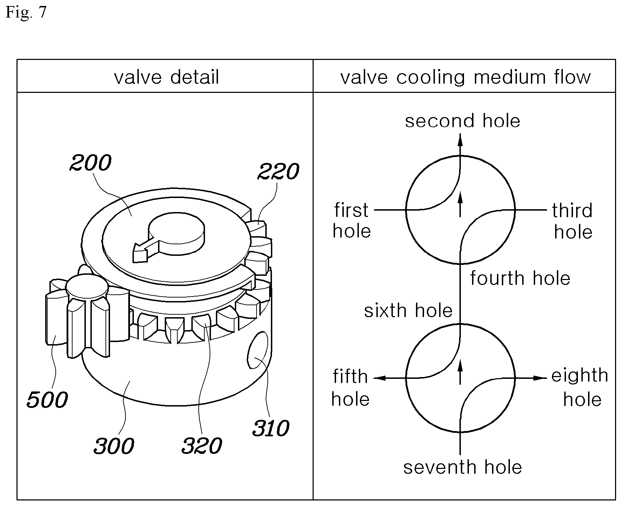

FIG. 6 is a diagram illustrating the first and second valves according to the first embodiment, and FIGS. 7 to 10 are diagrams illustrating the operations of the first and second valves according to the first embodiment.

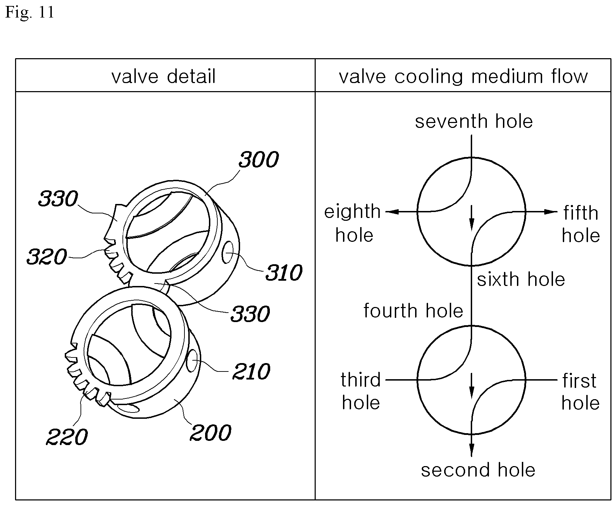

FIGS. 11 to 14 are diagrams illustrating the operation of the first and second valves according to the second embodiment.

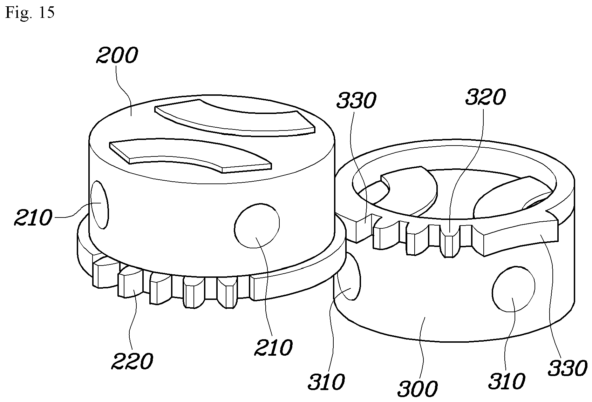

FIG. 15 is a diagram illustrating the first and second valves according to the third embodiment.

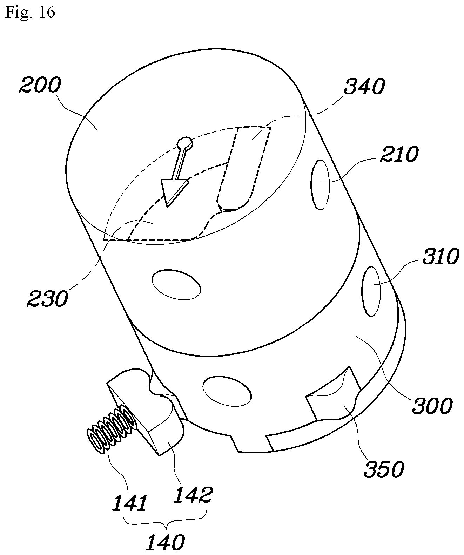

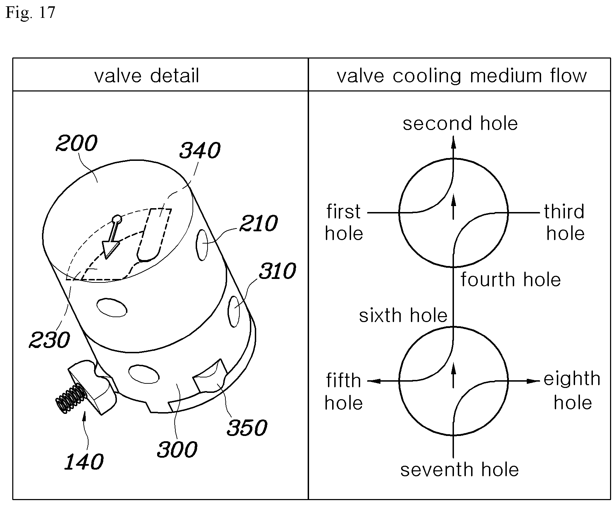

FIG. 16 is a diagram illustrating the first and second valves according to the fourth embodiment, and FIGS. 17 to 20 are diagrams illustrating the operation of the first and second valves according to the fourth embodiment.

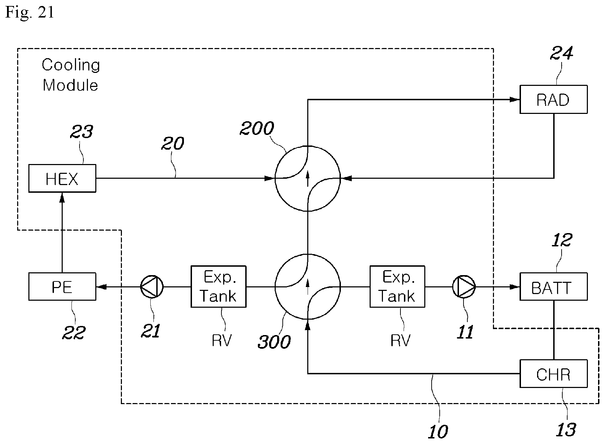

FIG. 21 is a diagram illustrating a thermal management system according to the present invention.

As shown in FIGS. 1 to 5, the multi-port valve apparatus according to the present invention includes a housing 100 with a plurality of flow paths 110 through which the cooling medium circulates, and an interior divided into a valve space 120 and a flow space 130, a first valve 200 rotatably installed in the valve space 120 of the housing 100 to selectively allow the cooling medium to flow through the plurality of flow paths 110 and the flow space 130, a second valve 300 rotatably installed in the valve space 120 of the housing 100 in linkage with the first valve 200 to selectively allow the cooling medium to flow through the plurality of flow paths 110 and the flow space 130, and an actuator 400 installed in the housing 100 and connected to the first valve 200 to control the rotational positions of the first and second valves 200 and 300.

The multi-port valve apparatus according to the present invention includes a housing 100, a first valve 200, a second valve 300, and an actuator 400, wherein the actuator 400 rotates the first and second valves 200 and 300 to allow the cooling medium to circulate through the flow paths 110 and flow space 130 of the housing 100. The actuator 400 can be controlled by a controller, which may include a communication device for interacting with other controllers or sensors to manage its assigned functions, a memory for storing operating systems, logic instructions, and input/output information, and one or more processors for making the judgments, calculations, and decisions necessary for function control.

This invention uniquely employs a single actuator 400 to control the rotational positions of the first and second valves 200 and 300, where the first value 200 is directly connected to the actuator 400 and the rotation of the first valve causes the second valve 300 to rotate in linkage with the first valve 200. Furthermore, the first valve 200 and the second valve 300 not only switch the flow direction of the cooling medium through the flow paths 110 in the housing 100 but also form a shared path for the cooling medium within the flow space 130 of the housing 130.

Through this, the present invention determines the flow direction of the cooling medium by the first valve 200 and the second valve 300 provided inside the housing 100, and adjusts the position of the second valve 300 in conjunction with the first valve 200 using a single actuator 400. This allows for the overall package size of the valve apparatus to be reduced, enabling the cooling medium to flow through various paths.

More specifically, the housing 100 is configured with the plurality of flow paths 110 and the flow space 130 that are separately apart. This separation between the plurality of flow paths 110 and the flow space 130 prevents interference for each other and mixing of the cooling medium. As shown in FIG. 1, the flow paths 110 within the housing 100 are arranged in a single direction, allowing for a reduced size of the housing 100 and ensuring sealing performance of each flow path 110. As a result, the shape of the gasket G that connects to the flow paths 110 of the housing 100 may be simplified.

Meanwhile, the first valve 200 has a plurality of first portholes 210 on the outer surface thereof, and the second valve 300 has a plurality of second portholes 310, the first portholes 210 and second portholes 310 being arranged such that one of them matches the flow space 130 depending on the rotational positions of the first valve 200 and second valve 300, while the remaining portholes are matched to different ports.

In this way, the first portholes 210 of the first valve 200 and the second portholes 310 of the second valve 300 are matched to either the flow paths 110 or the flow space 130 of the housing 100 depending on their rotational positions, allowing the cooling medium to be shared and circulated through the first valve 200 and second valve 300, or distributed through each flow path 110 to components requiring cooling. That is, depending on the rotational positions of the first valve 200 and the second valve 300, one of the first portholes 210 of the first valve 200 and the second portholes 310 of the second valve 300 is matched to the flow space 130, while the remaining first portholes 210 and second portholes 310 are matched to the flow paths 110 in the housing 100 to allow the cooling medium to be mixed and circulated or circulated individually for each component such that the cooling medium is distributed to the components requiring cooling.

In detail, the first valve 200 and the second valve 300 each have four first portholes 210 and four second portholes 310, and one of the first portholes 210 and one of the second portholes 310 are connected through the flow space 130, creating six ports with the first valve 200 and the second valve 300.

The first portholes 210 of the first valve 200 and the second portholes 310 of the second valve 300 are spaced by 90° intervals, respectively, and the actuator 400 rotates the first valve 200 in 90° increments, ensuring synchronized rotation of the first valve 200 and the second valve 300 by the same angle from a predetermined rotation angle.

Consequently, the housing 100 forms six flow paths 110, allowing the cooling medium to circulate through the first valve 200 and the second valve 300 via a single flow space 130. That is, among the four first portholes 210 of the first valve 200 and the four second portholes 310 of the second valve 300, one of the first portholes 210 and one of the second portholes 310 are connected through a connecting passage depending on the rotational positions of the first valve 200 and the second valve 300, while the three remaining first portholes 210 and three remaining second portholes 310 are connected to components where the cooling medium circulates, thus forming a circulation circuit for the cooling medium.

Particularly, this present invention is configured such that the first valve 200 is connected to the actuator 400, and the second valve 300 is synchronized with the first valve 200, allowing the rotational positions of the first valve 200 and the second valve 300 to be changed by the operation of the actuator 400. Here, the actuator 400 is configured to rotate the first valve 200 in 90° increments, altering the positions of the first portholes 210, and as the first valve 200 rotates within the predetermined rotation angle range of 90° to 180°, the second valve 300 rotates in synchronization with the first valve 200, causing the positions of the first portholes 210 and the second portholes 310 to change accordingly. In this configuration, the present invention may switch the flow direction of the cooling medium by altering the rotational positions of the first valve 200 and the second valve 300 using a single actuator 400. Further details on this aspect is provided below.

The valve structure according to the present invention can be applied in various embodiments as follows.

In the first embodiment, the first valve 200 and the second valve 300 are coaxially aligned as shown in FIG. 6, with the first valve 200 having a first gear 220 formed on the outer surface thereof and the second valve 300 having a second gear 320 on the outer surface thereof, the first and second gears 220 and 320 meshing together via a connecting gear 500.

The first valve 200 and the second valve 300 are arranged in the housing 100 to rotate around the same center axis, and the first gear 220 of the first valve 200, the second gear 320 of the second valve 300, and the connecting gear 500 are meshed with each other such that the rotation of the second valve 300 is linked to the rotation of the first valve 200. Here, the first gear 220 of the first valve 200 and the second gear 320 of the second valve 300 are formed on the outer surfaces of their facing end portions to mesh with the connecting gear 500.

In particular, the connecting gear 500 is rotatably installed in the flow space 130 of the housing 100, eliminating the need for separate space to accommodate the connecting gear 500 within the housing 100. Furthermore, even with the connecting gear 500 provided in the flow space 130 of the housing 100, the cooling medium may still circulate depending on the shape of the connecting gear 500. Additionally, the flow space 130 of the housing 100 can be formed larger than the connecting gear 500 to ensure a sufficient flow rate of the cooling medium.

Meanwhile, the first valve 200 and the second valve 300 are formed that their respective facing end portions overlap in a rotatable manner. That is, as shown in FIGS. 2 and 6, the first valve 200 and the second valve 300 are designed to form an insertion structure with their respective facing end portions in the direction facing each other, ensuring positional stability and independent rotation of the first valve 200 and the second valve 300. Additionally, as the first valve 200 and the second valve 300 are formed to overlap each other, the installation space for the first valve 200 and the second valve 300 is reduced, allowing the size of the housing 100 to be reduced.

According to this first embodiment of the present invention, a first gear 220 is formed along a part of the outer surface of the first valve 200, and a second gear 320 is formed along the entire outer surface of the second valve 300, such that when the first valve 200 is rotated within a predetermined angle range, the first gear 220 engages with the connecting gear 500, causing the second valve 300 to rotate together with the connecting gear 500.

The first valve 200 and the second valve 300 may have their respective portholes spaced at 90° intervals, and the first gear 220 of the first valve 200 may be designed to mesh with the connecting gear 500 after rotating 90° from its initial position and then rotate together to 180°. Accordingly, the predetermined angle range may be set from 90° to 180° such that when the first valve 200 rotates more than 90°, the first gear 220 meshes with the connecting gear 500, causing the connecting gear 500 to rotate, which in turn rotates the second valve 300. The actuator 400 may be operated to rotate the first valve 200 by 90° increments when changing the rotational positions of the first valve 200 and the second valve 300. The first portholes 210 of the first valve 200 may include first, second, third, and fourth holes interconnected, and the second portholes 310 of the second valve 300 may include fifth, sixth, seventh, and eighth holes.

Regarding the detailed operation in the first embodiment, in the initial positions of the first valve 200 and the second valve 300, the fourth hole of the first valve 200 and the sixth hole of the second valve 300 are connected through the flow space 130 as shown in FIG. 7.

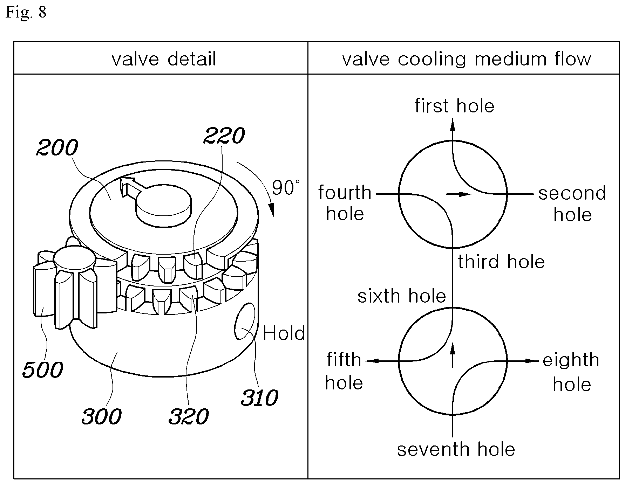

As shown in FIG. 8, when the actuator 400 operates to rotate the first valve 200 by 90°, the first valve 200 only rotates 90°, changing the positions of the first, second, third, and fourth holes of the first valve 200, and the second valve remains in position, which causes the third hole of the first valve 200 and the sixth hole of the second valve 300 to be connected through the flow space 130.

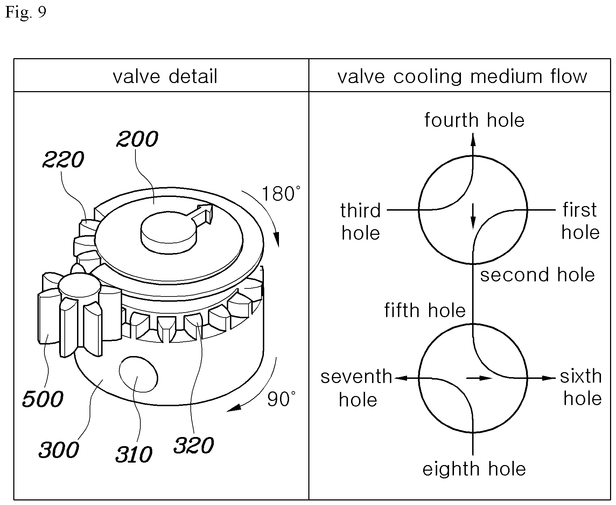

As shown in FIG. 9, when the actuator 400 operates to rotate the first valve 200an additional 90° within the set angle range, totaling 180°, the first gear 220 of the first valve 200 meshes with the connecting gear 500, causing the second valve 300 to rotate 90° in conjunction with the rotation of the connecting gear 500. As a result, the positions of all the first, second, third, and fourth holes of the first valve 200 and the positions of all the fifth, sixth, seventh, and eighth holes of the second valve 300 are changed, which causes the second hole of the first valve 200 and the fifth hole of the second valve 300 to be connected through the flow space 130.

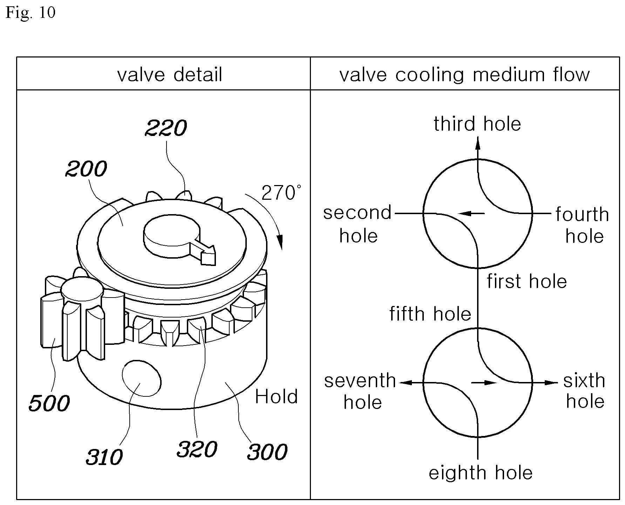

Subsequently, as shown in FIG. 10, when the actuator 400 operates to rotate the first valve 200 an additional 90°, totaling 270°, the first valve 200 only rotates 270°, changing the positions of the first, second, third, and fourth holes of the first valve 200, and the second valve 300 remains in position, resulting in the first hole of the first valve 200 and the fifth hole of the second valve 300 being connected through the flow space 130.

Meanwhile, according to the second embodiment of the present invention, as seen in FIG. 11, the first valve 200 and the second valve 300 are arranged with their central axes horizontally aligned, and the first gear 220 is formed at a portion of the outer surface of the first valve 200, while the second gear 320 is formed at a portion of the outer surface of the second valve 300 to mesh with the first gear 220 of the first valve 200.

In this way, the first valve 200 and the second valve 300 are configured to arranged with their outer surfaces facing each other and their central axes horizontally aligned such that when the first gear 220 of the first valve 200 and the second gear 320 of the second valve 300 mesh with each other, the second valve 300 rotates in conjunction with the rotation of the first valve 200. Here, since the first gear 220 of the first valve 200 and the second gear 320 of the second valve 300 are each formed in partial segments, when the first gear 220 and the second gear 320 do not mesh with each other, only the first valve 200 rotates, but when the first gear 220 and the second gear 320 do mesh with each other, the second valve 300 rotates in conjunction with the first valve 200.

In addition, the second valve 300 has support protrusions 330 extending on both sides of the second gear 320 on its outer surface, and these support protrusions 330 are formed to contact with the outer surface of the first valve 200. These support protrusions 330 are formed in a manner that surrounds the outer surface of the first valve 200, creating a support structure for the first valve 200 and thereby preventing any unintended rotation of the second valve 300. In addition, when the first valve 200 rotates, the second valve 300 remains fixed in position, and when the first gear 220 of the first valve 200 meshes with the second gear 320 of the second valve 300, both the first valve 200 and the second valve 300 rotate together.

According to this second embodiment of the present invention, the second valve 300 does not rotate when the support protrusions 330 remain in contact with the outer surface of the first valve 200, even though the first valve 200 rotates; however, when the first valve 200 rotates within a predetermined angle range and the first gear 220 meshes with the second gear 320, the second valve 300 rotates by a predetermined angle.

The first valve 200 and the second valve 300 may have their respective portholes spaced at 90° intervals, and the first gear 220 of the first valve 200 may be designed to mesh with the second gear 320 after rotating 90° from its initial position and then rotate together to 180°. Accordingly, the predetermined angle range may be set from 90° to 180° such that when the first valve 200 rotates more than 90°, the first gear 220 meshes with the second gear 320, allowing both the first valve 200 and the second valve 300 to rotate together. The actuator 400 may be operated to rotate the first valve 200 by 90° increments when changing the rotational positions of the first valve 200 and the second valve 300. The first portholes 210 of the first valve 200 may include first, second, third, and fourth holes interconnected, and the second portholes 310 of the second valve 300 may include fifth, sixth, seventh, and eighth holes.

Regarding the detailed operation in the second embodiment, in the initial positions of the first valve 200 and the second valve 300, the fourth hole of the first valve 200 and the sixth hole of the second valve 300 are connected through the flow space 130 as shown in FIG. 11.

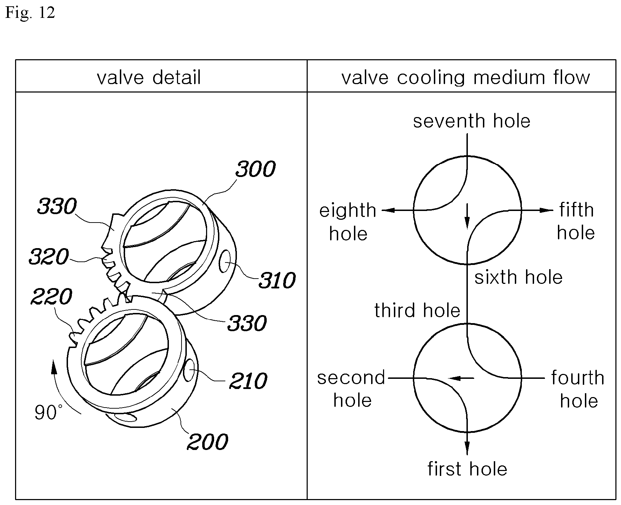

As shown in FIG. 12, when the actuator 400 operates to rotate the first valve 200 by 90°, the first valve 200 only rotates 90°, changing the positions of the first, second, third, and fourth holes of the first valve 200, and the second valve 300 remains in position, which causes the third hole of the first valve 200 and the sixth hole of the second valve 300 to be connected through the flow space 130.

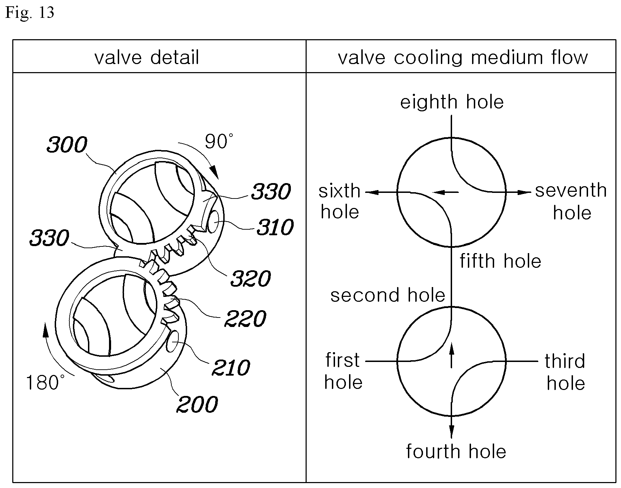

As shown in FIG. 13, when the actuator 400 operates to rotate the first valve 200 an additional 90° within the set angle range, totaling 180°, the first gear 220 of the first valve 200 meshes with the second gear 320 of the second valve 300, causing both the first valve 200 and the second valve 300 to rotate together. As a result, the positions of all the first, second, third, and fourth holes of the first valve 200 and the positions of all the fifth, sixth, seventh, and eighth holes of the second valve 300 are changed, which causes the second hole of the first valve 200 and the fifth hole of the second valve 300 to be connected through the flow space 130.

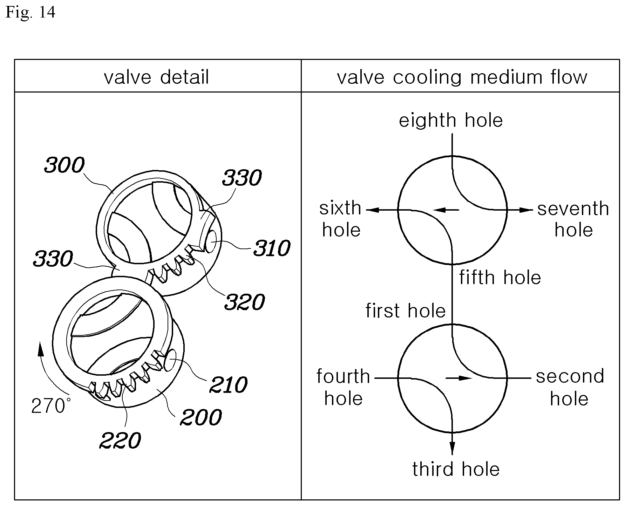

Subsequently, as shown in FIG. 14, when the actuator 400 operates to rotate the first valve 200 an additional 90°, totaling 270°, the first valve 200 only rotates 270°, changing the positions of the first, second, third, and fourth holes of the first valve 200, and the second valve 300 remains in position, causing the first hole of the first valve 200 and the fifth hole of the second valve 300 to being connected through the flow space 130.

As an alternative to the second embodiment, the first valve 200 and the second valve 300 may be arranged offset from each other such that their outer surfaces do not face each other, while still allowing the first gear 220 and the second gear 320 to mesh. This is shown as the third embodiment in FIG. 15 in which the first valve 200 and the second valve 300 are arranged offset from each other. In this case, the housing 100 may have a changeable shape to accommodate the integration of the first valve 200 and the second valve 300, and the flow space 130 within the housing 100 may be separately formed.

In the fourth embodiment, as shown in FIG. 16, the first valve 200 and the second valve 300 are coaxially aligned, with the first valve 200 having a driving groove 230 occupying a predetermined area on its end portion facing the second valve 300, and the second valve 300 having a corresponding driving protrusion 340 inserted into this groove 230 on its end portion facing the first valve 200.

In this manner, the first valve 200 and the second valve 300 are coaxially arranged within the housing 100 to rotate around the same axis, and as the position of the driving groove 230 formed on the first valve 200 changes, the driving protrusion 340 on the second valve 300 moves, causing the second valve 300 to rotate in conjunction with the first valve 200. Here, the first valve 200 and the second valve 300 create an overlapping structure through the insertion mechanism of the driving groove 230 and the driving protrusion 340, allowing the first valve 200 to rotate alone when its driving groove 230 shifts but the driving protrusion 300 remains in position during actuation by the actuator 400, whereas when either side of the driving groove 230 of the first valve 200 pushes the driving protrusion 340 of the second valve 300, both the first valve 200 and the second valve 300 rotate in linkage.

In addition, the second valve 300 has a position-fixing protrusion 350 protruding on its outer surface, and the housing 100 is provided with an elastic support member 140 that contacts the outer surface of the second valve 300 or the position-fixing protrusion 350 of the second valve 300 depending on the rotational position of the second valve 300. The elastic support member 140 includes a spring 141 and a spacer 142, with the spring 141 installed in the housing 100 and the spacer 142 connected to the spring 141 formed to contact the outer surface of the second valve 300. In particular, the spacer 142 is shaped to contact the outer surface of the second valve 300 while encircling the position-fixing protrusion 350, ensuring smooth position regulation of the second valve 300 via the elastic support member 140.

That is, the second valve 300 may have a plurality of position-fixing protrusions 350 spaced along its outer surface. In this case, the position-fixing protrusions 350 may be spaced at intervals of 90°. By this arrangement, the second valve 300 is regulated in position by the elastic force exerted when the elastic support member 140 contacts the position-fixing protrusion 350, thereby preventing arbitrary rotation. Consequently, when the driving protrusion 340 is pushed by the rotation of the first valve 200, the second valve 300 may rotate in conjunction with the first valve 200, causing its rotational position to change.

In this fourth embodiment, the first valve 200 is designed with the driving groove 230 extending from the center axis by a certain angle, allowing the second valve 300, while the first valve 200 is rotating, to remain stationary when the driving protrusion 340 moves within the driving groove 230, but allowing the second valve 300 to rotate in conjunction with the first valve 200 when the first valve 200 rotates more than a predetermined angle, causing the driving protrusion 340 to contact and to be pushed by either side of the driving groove 230.

That is, the driving groove 230 of the firs valve 200 may be extended by 90° rotation range from the center axis, and the rotational movement of the second valve 300 is determined by the position of the driving protrusion 340 as the first valve 200 rotates. For example, when the first valve 200 rotates 90° from its initial position and continues to rotate up to 180°, the driving protrusion 340 of the second valve 300 is pushed, causing both the first valve 200 and the second valve 300 to rotate together. The actuator 400 may be operated to rotate the first valve 200 by 90° increments when changing the rotational positions of the first valve 200 and the second valve 300. The first portholes 210 of the first valve 200 may include first, second, third, and fourth holes interconnected, and the second portholes 310 of the second valve 300 may include fifth, sixth, seventh, and eighth holes.

Regarding the detailed operation in the fourth embodiment, in the initial positions of the first valve 200 and the second valve 300, the fourth hole of the first valve 200 and the sixth hole of the second valve 300 are connected through the flow space 130 as shown in FIG. 17.

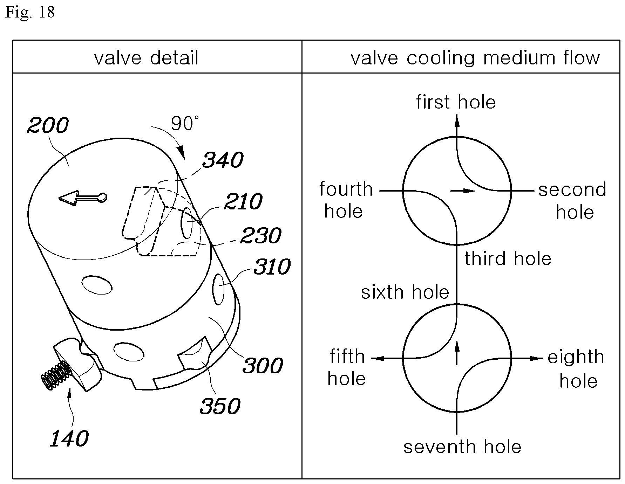

As shown in FIG. 18, when the actuator 400 operates to rotate the first valve 200 by 90°, the first valve 200 only rotates, changing the positions of the first, second, third, and fourth holes of the first valve 200, and the second valve remains in position, which causes the third hole of the first valve 200 and the sixth hole of the second valve 300 to be connected through the flow space 130. Here, as only the position of the driving groove 230 of the first valve 200 changes, the driving protrusion 340 of the second valve 300 shift contact from one side of the driving groove 230 and then the opposite side.

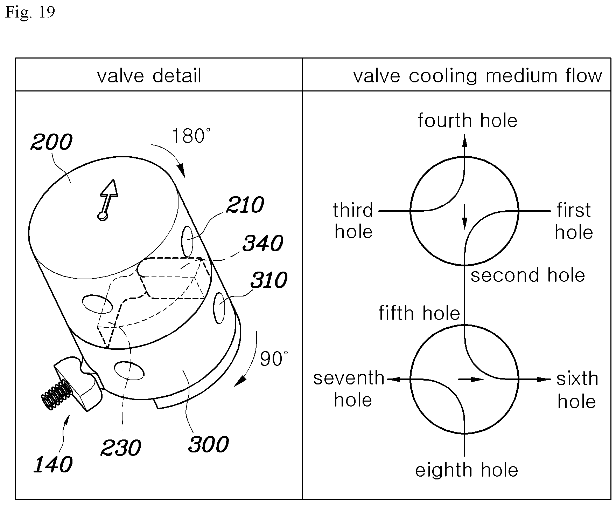

As shown in FIG. 19, when the actuator 400 operates to rotate the first valve 200 an additional 90° within the set angle range, totaling 180°, the first valve 200 pushes the driving protrusion 340 of the second valve 300, causing the second valve 300 to rotate 90° in linkage with the first valve 200. As a result, the positions of all the first, second, third, and fourth holes of the first valve 200 and the positions of all the fifth, sixth, seventh, and eighth holes of the second valve 300 are changed, which causes the second hole of the first valve 200 and the fifth hole of the second valve 300 to be connected through the flow space 130.

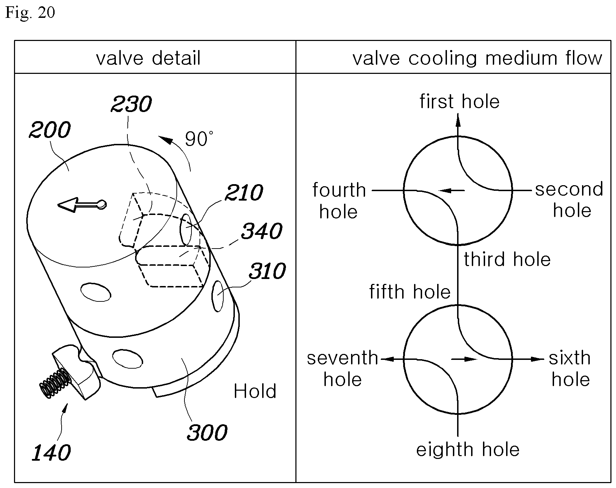

Subsequently, as shown in FIG. 20, when the actuator 400 operates to rotate the first valve 200 back by 90°, the second valve 300 remains in position, and the third port of the first valve 200 and the fifth port of the second valve 300 are connected through the flow space 130. Here, as only the position of the driving groove 230 of the first valve 200 changes, the driving protrusion 340 of the second valve 300 switches contact from the opposite side of the driving groove 230 to one side. Also, the first valve 200 and the second valve 300 may be in a standby state for reverse operation to return to their original positions.

As described above, according to various embodiments of the present invention, the first valve 200 and the second valve 300 are configured for the actuator 400 to vary the rotational position of the first valve 200, thereby linking and rotating the second valve 300, and depending on the rotation angle of the first valve 200, the porthole positions of both valves 200 and 300 can change to switch the circulation direction of the cooling medium.

Meanwhile, the heat management system including the above described multi-port valve apparatus of the present invention may include a first coolant line 10 through which the cooling medium circulates to a first pump 11, a battery 12, and a first heat exchanger 13, and a second coolant line 20 through which the cooling medium circulates to a second pump 21, a power electronics module 22, a second heat exchanger 23, and a radiator 24, and may be configured for the coolant in the first coolant line 10 and second coolant line 20 to be selectively shared via the multi-port valve apparatus A, switching the circulation direction of the cooling medium.

Here, the first coolant line 10 and the second coolant line 20 may each be provided with a reservoir RV.

In the first coolant line 10, the cooling medium, driven by the first pump 11, circulates and undergoes heat exchange through the first heat exchanger 13 and the battery 12. Here, the first heat exchanger 13 may be configured to regulate the temperature of the coolant circulating in the first coolant line 10 through heat exchange with refrigerant, ambient air, or another cooling fluid.

In the second coolant line 20, the cooling medium, driven by the second pump 21, circulates and undergoes heat exchange through the radiator 24, the second heat exchanger 23, and the power electronics module 22. Here, the second heat exchanger 23 may be configured to regulate the temperature of the coolant circulating in the second coolant line 20 by exchanging heat with refrigerant, ambient air, or another cooling fluid.

In this way, the cooling of the battery 12 is achieved through heat exchange with coolant in the first coolant line 10, the cooling of the power electronics module 22 is achieved through heat exchange with coolant in the second coolant line 20, and a heat pump may be implemented through heat exchange of the coolant via the first heat exchanger 13 and the second heat exchanger 23.

The flow path of the coolant in the first coolant line 10 and the second coolant line 20 is determined by the first valve 200 and the second valve 300 housed within the housing 100. The housing 100, reservoir RV, first heat exchanger 13, and second heat exchanger 23 may be modularized.

In the present invention, the flow path of the coolant in the first coolant line 10 and the second coolant line 20 is determined based on the rotational positions of the first valve 200 and the second valve 300, allowing the coolant to circulate individually in each coolant line or in a maxed manner across both coolant lines. This configuration allows the present invention to regulate the coolant temperature based on various conditions, such as indoor air conditioning, cooling the battery 12, cooling the power electronics module 22, and ambient temperature, thereby ensuring cooling efficiency through the coolant.

The multi-port valve apparatus and thermal management system using the same, structured as described, are advantageous in terms of improving the temperature management efficiency of the coolant by reducing the overall package size of the valves, selectively circulating the coolant to a plurality of coolant flow paths through the valves with guaranteed functionality, and facilitating separate or mixed distribution of the coolant depending on circumstances.

Although the disclosure has been illustrated and described in connection with specific embodiments, it will be obvious to those skilled in the art that various modification and changes can be made thereto without departing from the spirit of the disclosure or the scope of the appended claims.

**DESCRIPTION OF REFERENCE NUMERALS**

| | | | |
|---|---|---|---|
| 100: | housing | 110: | flow path |
| 120: | valve space | 130: | flow space |
| 140: | electric support member | 141: | spring |
| 142: | spacer | 200: | first valve |
| 210: | first porthole | 220: | first gear |
| 230: | driving groove | 300: | second valve |
| 310: | second porthole | 320: | second gear |
| 330: | support protrusion | 340: | driving protrusion |
| 350: | position-fixing protrusion | 400: | actuator |
| 500: | connecting gear | 10: | first coolant line |
| 11: | first pump | 12: | battery |
| 13: | first heat exchanger | 20: | second coolant line |
| 21: | second pump | 22: | power electronics module |
| 23: | second heat exchanger | 24: | radiator |

## Claims

1. A multi-port valve apparatus comprising:
a housing including a plurality of flow paths through which a cooling medium circulates, and an interior including a valve space and a flow space;
a first valve rotatably provided in the valve space of the housing and configured to selectively circulate the cooling medium through the plurality of flow paths and the flow space;
a second valve rotatably provided in the valve space of the housing to be rotated in conjunction with the first valve and configured to selectively circulate the cooling medium through the plurality of flow paths and the slow space; and
an actuator provided in the housing and connected to the first valve to control positions of the first valve and the second valve.

2. The multi-port valve apparatus of claim 1, wherein the plurality of flow paths and the flow space are arranged separately in the housing.

3. The multi-port valve apparatus of claim 1, wherein the first valve comprises a plurality of first portholes formed on an outer surface thereof, and the second valve comprises a plurality of second portholes, one of the plurality of first portholes and second portholes matching with the flow space depending on rotational positions of the first valve and the second valve, the remaining portholes configured to match to different ports.

4. The multi-port valve apparatus of claim 3, wherein the first valve and the second valve each comprise four first portholes and four second portholes, and one of the first portholes and one of the second portholes are connected through the flow space, forming six ports with the first valve and the second valve.

5. The multi-port valve apparatus of claim 4, wherein the first portholes of the first valve are spaced at 90° intervals, the second portholes of the second valve are spaced at 90° intervals, and the actuator rotates the first valve by 90° increments, causing the first valve and the second valve to be linked at a predetermined rotation angle and to rotate together by the rotation angle.

6. The multi-port valve apparatus of claim 1, wherein the first valve and the second valve are coaxially aligned, the first valve comprising a first gear formed on an outer surface thereof, the second valve comprising a second gear formed on an outer surface thereof, the first and second gears meshing together via a connecting gear.

7. The multi-port valve apparatus of claim 6, wherein the connecting gear is rotatably provided in the flow space of the housing.

8. The multi-port valve apparatus of claim 6, wherein the first gear is formed along a part of the outer surface of the first valve, and the second gear is formed along an entire outer surface of the second valve, the first gear meshing with the connecting gear based on the first valve rotating within a predetermined angle range, causing the second gear to rotate together with the connecting gear.

9. The multi-port valve apparatus of claim 6, wherein the first valve and the second valve are formed with facing end portions that overlap in a rotatable manner.

10. The multi-port valve apparatus of claim 1, wherein the first valve and the second valve are arranged with center axes thereof aligned horizontally, the first valve comprising a first gear formed along part of an outer surface thereof, the second valve comprising a second gear formed along part of an outer surface thereof to mesh with the first gear.

11. The multi-port valve apparatus of claim 10, wherein the second valve comprises a support protrusion extending from the outer surface thereof on both sides of the second gear, the support protrusion configured to contact with the outer surface of the first valve.

12. The multi-port valve apparatus of claim 11, wherein the second valve, while the first valve is rotating, is configured not to rotate when the support protrusion contacts with the outer surface of the first valve, and is configured to rotate by a predetermined angle based on the first gear meshing with the second gear while the first valve rotates within a predetermined angle range.

13. The multi-port valve apparatus of claim 10, wherein the first valve and the second valve are arranged with the center axes thereof aligned horizontally and the outer surface thereof are offset, not facing each other, but allowing the first gear and the second gear to mesh.

14. The multi-port valve apparatus of claim 1, wherein the first valve and the second valve are coaxially aligned, the first valve comprising a driving groove having a predetermined area on one end portion thereof facing the second valve, the second valve comprising a corresponding driving protrusion inserted into the driving groove on one end portion facing the first valve.

15. The multi-port valve apparatus of claim 14, wherein the first valve is formed with the driving groove extending from the center axis by a predetermined angle, the second valve, while the first valve is rotating, configured not to rotate when the driving protrusion moves within the driving groove and configured to rotate in conjunction with the first valve to cause the driving protrusion to contact and to be pushed by either side of the driving groove when the first valve rotates more than a predetermined angle.

16. The multi-port valve apparatus of claim 14, wherein the second valve comprises a position-fixing protrusion protruding on the outer surface thereof, and the housing comprises an elastic support member contacting with the outer surface of the second valve or the position-fixing protrusion of the second valve depending on the rotational position of the second valve.

17. A thermal management system including the multi-port valve apparatus according to claim 1, the system comprising:
a first coolant line configured to circulate a cooling medium to a first pump, a battery, and a first heat exchanger; and
a second coolant line configured to circulate the cooling medium to a second pump, a power electronics module, a second heat exchanger, and a radiator,
wherein the coolant from the first coolant line and the second coolant line is selectively shared through the multi-port valve apparatus to switch the flow direction of the cooling medium by the multi-port valve apparatus.
